Europäisches Patentamt

European Patent Office

Office européen des brevets

(11) Veröffentlichungsnummer : **0 037 521**
**B1**

(12) **EUROPÄISCHE PATENTSCHRIFT**

(45) Veröffentlichungstag der Patentschrift :
17.07.85

(51) Int. Cl.⁴ : **B 23 K 9/02**

(21) Anmeldenummer : 81102261.5

(22) Anmeldetag : 25.03.81

(54) Verfahren und Einrichtung zur automatischen Schweissbahnverfolgung.

(30) Priorität : 25.03.80 BG 47116/80
19.05.80 BG 47828/80
11.07.80 BG 48465/80

(43) Veröffentlichungstag der Anmeldung :
14.10.81 Patentblatt 81/41

(45) Bekanntmachung des Hinweises auf die Patenterteilung : 17.07.85 Patentblatt 85/29

(84) Benannte Vertragsstaaten :
CH DE FR GB IT LI SE

(56) Entgegenhaltungen :
EP-A- 0 017 167
DE-A- 2 711 660
DE-C- 975 060
GB-A- 1 541 789
US-A- 4 021 840

(73) Patentinhaber : INSTITUT PO TECHNITSCHESKA KIBERNETIKA I ROBOTIKA
Akademik Bontschev-Strasse, Block 12
Sofia (BG)

(72) Erfinder : Natschev, Georgi Natschev, Dipl.-Ing.
Komplex Tschervena Svesda Block 30-4
Sofia (BG)
Erfinder : Angelov, Angel Simeonov, Dipl.-Ing.
Boul.Skobelev 26
Sofia (BG)
Erfinder : Petkov, Borjan Iliev, Dipl.-Ing.
Komplex Ljulin "215-te"-Strasse Block 11-17
Sofia (BG)

(74) Vertreter : von Füner, Alexander, Dr. et al
Patentanwälte v. Füner, Ebbinghaus, Finck Mariahilfplatz 2 & 3
D-8000 München 90 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zur automatischen Schweißbahnverfolgung bzw. zum Ermitteln des Verlaufs einer auszuführenden Schweißnaht während des Schweißvorgangs, die beim Lichtbogenschweißen mit Industrierobotern und anderen elektronisch gesteuerten Automaten eingesetzt werden können.

Es ist ein Verfahren und eine Vorrichtung zur Schweißbahnverfolgung gemäß dem Oberbegriff des Patentanspruches 1 bzw. 6 bekannt (GB-A-1 541 789). Hierbei erfolgt die Abtastung der zu verschweißenden Werkstücke mittels einer vor dem Schweißkopf angeordneten und in unmittelbarer Nähe der Werkstücke befindlichen Sonde, die mit Hilfe eines Motors in einem vorbestimmten Winkelbereich verschwenkt wird. Überstreicht diese Sonde die Schweißfuge, so ergibt sich eine Signaländerung, die zur Ausrichtung des nachfolgenden Schweißkopfes auf die erfaßte Schweißfuge herangezogen werden kann. Da die Sonde in unmittelbarer Nähe des Werkstückes angeordnet ist, besteht die Gefahr, daß die Signale der Sonde infolge der hohen Temperatur und der Störstrahlung des Lichtbogens gestört werden, was sich negativ auf die Genauigkeit der Ausrichtung des Schweißkopfes auf die Schweißfuge auswirkt.

Weiterhin ist ein Verfahren zur automatischen Führung eines Schweißkopfes auf Schweißspaltmitte bekannt (DE-OS-2 421 191), bei dem der vor dem Schweißkopf angeordnete Entfernungsmeßgeber die Entfernung zwischen dem Brenner und den beiden Schweißstücken mißt, wonach ihre Berührungslinie, d. h. die Stelle der Schweißnaht, berechnet wird. Ein Nachteil dieses Verfahrens liegt darin, daß bei Änderung der Konfiguration der Schweißnaht oder der Neigung des Kopfes auch eine Änderung der Anordnung des Entfernungsmeßgebers erforderlich ist. Außerdem ist das Verfahren nur bei Winkelnähten oder beim Schweißen von Werkstücken mit abgeschrägten Kanten einsetzbar. Ein weiterer Nachteil liegt darin, daß für das richtige Richten des Entfernungsmeßgebers dieser mindestens einen zusätzlichen Beweglichkeitsgrad in Bezug auf den Schweißkopf aufweisen muß.

Bei einem anderen bekannten optischen Verfahren zur Schweißbahnverfolgung (DE-OS-2 711 660) wird die Zone in unmittelbarer Nähe der Schweißstelle mit einer Fernsehkamera abgetastet, wobei ein zweidimensionaler « Schnitt » im Bereich der Schweißnaht oder in ihrer Nähe erhalten wird. Danach wird der Punkt, durch den der Schweißkopf hindurchgehen soll, nach bekannten mathematischen Verfahren ermittelt.

Ein Nachteil dieses Verfahrens liegt darin, daß die erhaltene Information für das Gewährleisten einer hochwertigen Schweißnaht nicht ausreichend ist, da von einem zweidimensionalen Schnitt ausgegangen wird. Außerdem ist eine komplizierte mechanische und elektronische Ausrüstung im Bereich des Lichtbogens erforderlich, was die Verläßlichkeit des Schweißsystems stark herabsetzt.

Bei weiteren bekannten Einrichtungen zur Schweißbahnverfolgung erfolgt das Messen der Entfernung bis zu den nah angeordneten Schweißstücken durch Verwendung von induktiven, kapazitiven, Mikrowellen-, pneumatischen und anderen Meßgebern (vgl. DE-OS-2 608 720, US-PS-4 015 101, JP-PS-5 125 756). Ein Nachteil dieser Einrichtungen liegt darin, daß der Meßbereich bis auf einige Millimeter begrenzt ist. Deshalb ist ihr Einsatz beim Schweißen wegen der Notwendigkeit ihrer Anordnung in unmittelbarer Nähe zum Lichtbogen ziemlich erschwert, da dort die Temperatur hoch ist, ununterbrochen geschmolzenes Metall herausspritzt und die elektromagnetischen Störungen stark sind.

Andere bekannte Entfernungsmeßeinrichtungen haben Interferometer, welche mit Mikrowellen-, Laser- und anderen elektromagnetischen Strahlungen arbeiten und das Erzielen einer hohen Meßgenauigkeit erlauben (vgl. US-PS-3 775 582). Ein Nachteil dieser Einrichtungen vom Standpunkt ihrer Verwendung für das Messen der relativen Position des Schweißkopfes in Bezug auf die Schweißstücke liegt darin, daß beim Übergang eines Strahles elektromagnetischer Energie von dem einen Schweißstück zum anderen ein Verlust des Signals eintreten kann, was die Funktion stört.

Schließlich sind noch Einrichtungen für das Bestimmen der Position von Schweißstücken mittels einer Fernsehkamera bekannt, die ein Abbild der Zone um die Schweißnaht erzeugt, wonach mittels bekannter Verfahren eine bestimmte geometrische Information erhalten wird (vgl. DE-OS-2 711 660 und US-PS-4 242 620). Ein Nachteil dieser Einrichtungen liegt, analog zu dem bereits Ausgeführten, in der Notwendigkeit, daß die Kamera eine direkte Sicht zum Lichtbogen erlaubt. Dies macht sie empfindlich für die schädlichen Einwirkungen des Schweißvorgangs. Andererseits erfordert das Erhalten der geometrischen Information sehr komplizierte und somit entsprechend teuere logische Recheneinrichtungen mit großem Speichervermögen. Außerdem erschwert die Kamera selbst, da sie in der Nähe des Schweißkopfes angeordnet ist, den Zugang des Schweißkopfes zu einigen Nahttypen, was die Anwendbarkeit der Schweißmaschine — Roboter oder Automat — für diese Nähte einschränkt.

Der Erfindung liegt die Aufgabe zugrunde, das Verfahren und die Vorrichtung der gattungsgemäßen Art derart weiterzubilden, daß einer Schweißnaht willkürlicher Konfiguration auf einfache Weise genau gefolgt werden kann.

Diese Aufgabe wird verfahrensgemäß durch die im Patentanspruch 1 beschriebenen Maßnahmen sowie vorrichtungsmäßig durch die im Patentanspruch 6 beschriebenen Merkmale gelöst.

Vorteilhafte Weiterbildungen und Ausgestaltungen des erfindungsgemäßen Verfahrens sowie der erfindungsgemäßen Vorrichtung sind Gegenstand der Patentansprüche 2 bis 5 bzw. 7 bis 9.

Mit Hilfe der Erfindung kann eine dreidimensionale Darstellung des gesamten Bereichs um die Schweißstelle herum erzielt werden, wodurch ein Bestimmen der Bewegungsrichtung des Schweißkopfes möglich ist. Das Messen der Entfernungen zu Punkten, die auf allen Seiten um den Schweißkopf herum angeordnet sind, ermöglicht das Erhalten von Informationen bezüglich der Form der bereits ausgeführten Naht. Dies ermöglicht eine Korrektur der technologischen Parameter, so daß eine Schweißnaht mit gleichbleibender Qualität entlang der gesamten Nahtlänge erzielt wird. Wenn sich der Schweißkopf Stellen mit einer wesentlichen Änderung der Nahtrichtung nähert, z. B. Ecken, ermöglicht das Verfahren eine rechtzeitige genaue Einstellung der zukünftigen Bahn, unabhängig von ihrer Richtung. Dies führt zu einer wesentlichen Kürzung der Hilfszeit des Schweißvorrichtung und erhöht die Betriebseffektivität. Dadurch, daß praktisch kontinuierlich ein Abtasten um den Schweißkopf herum durchgeführt wird, ist beim Annähern an zufällige Hindernisse der rechtzeitige Empfang eines Signals für die Unterbrechung der Bewegung in der das Hindernis aufweisenden Richtung möglich. Dies erhöht die Zuverlässigkeit der gesamten Vorrichtung wesentlich. Die nach dem erfindungsgemäßen Verfahren erhaltene Information kann so umfangreich sein, daß sie ein Erweitern der « intellektuellen » Möglichkeiten der Industrieroboter für Schweißen bei nur geringfügiger Kostenerhöhung erlaubt, was ihren Einsatzbereich bedeutend erweitert. Das optische System der Einrichtung für die Schweißbahnverfolgung kann bei geeigneter Bauweise in genügender Entfernung von der Schweißzone angeordnet sein, z. B. an der Basis des Schweißkopfes, wo die Gefahr von Beschädigungen durch Metallspritzer, Metalldämpfe und andere vom Lichtbogen während des Schweißens ausgesonderte Produkte, minimal ist.

Anhand der Zeichnungen wird die Erfindung beispielsweise näher erläutert. Es zeigen :

Figur 1 perspektivisch teilweise geschnitten eine Vorrichtung zur Schweißbahnverfolgung

Figur 2 die Anordnung des optischen Systems der Vorrichtung von Fig. 1 in Bezug auf den Schweißkopf Figur 3 ein Ausführungsbeispiel des optischen Systems von Fig. 2 und

Figur 4 eine graphische Darstellung der Einhüllenden der mit der Vorrichtung gemessenen Entfernungssignale.

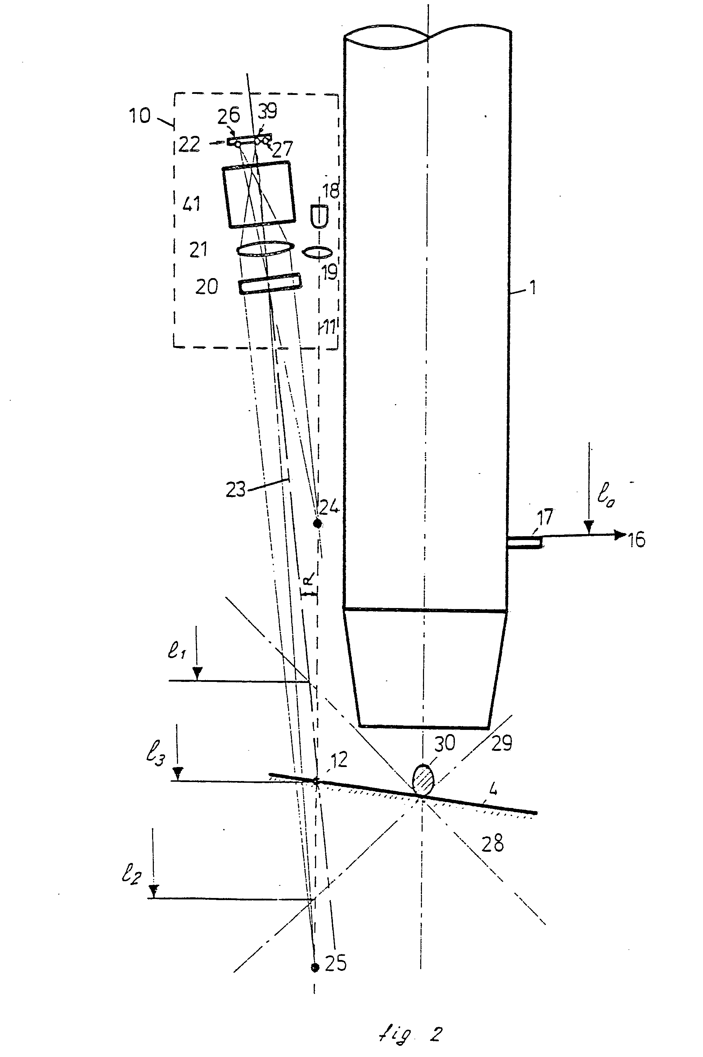

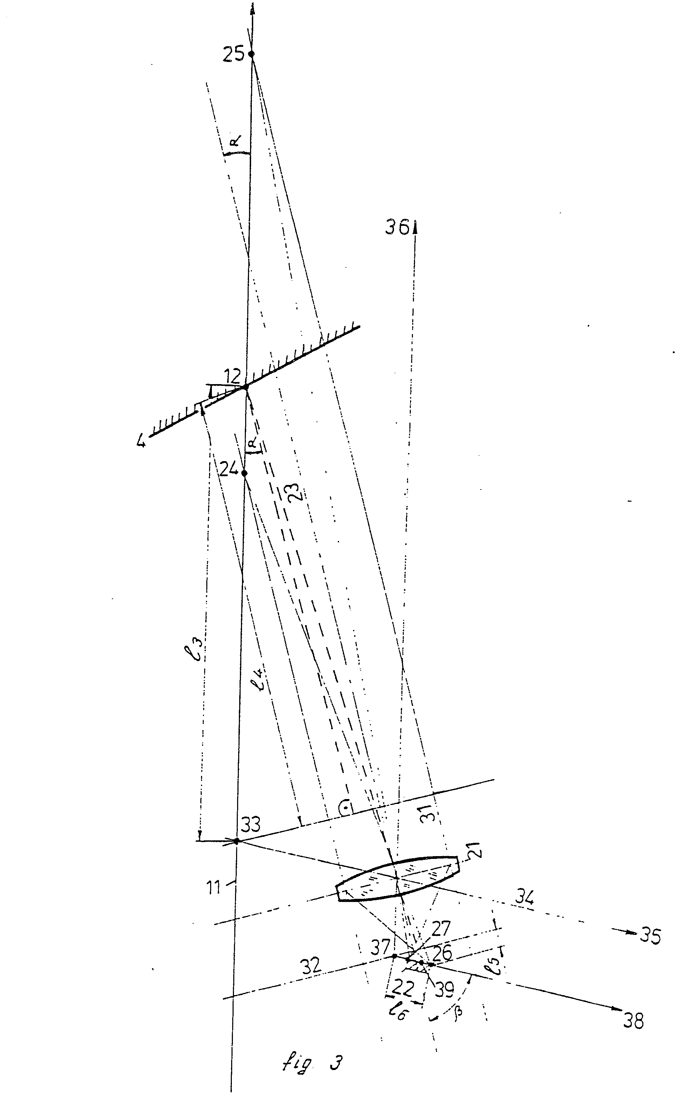

In den Zeichnungen sind ein Schweißkopf 1 mit einer Kontaktdüse 2, ein Elektrodendraht 3, Schweißstücke 4 und ein Lichtbogen 5 gezeigt. An dem Kopf 1 ist auf einem Lager 7 eine sich drehende Basis 8 befestigt, die mit einem Motor 9 verbunden ist, der starr auf dem Schweißkopf 1 befestigt ist. Auf die bewegliche Basis 8 ist eine Entfernungsmeßeinrichtung in Form eines Entfernungsmeßgebers 10 angeordnet, der mit einem Meßstrahl 11 arbeitet. Die aufeinanderfolgenden bzw. laufenden Punkte 12 der Oberfläche der Schweißstücke 4 bilden Kurven 13. In den Punkten 14 schneiden die Kurven 13 die Stoßstelle zwischen beiden Schweißstücken 4. Punkt 15 ist der Schnittpunkt des Meßstrahls 11 mit der Schweißnaht 6. Mit 16 ist die Richtung des Null-Radiusvektors des Koordinatensystems des Kopfes 1 bezeichnet, der mittels eines Stiftes 17 oder einer entsprechenden Nase auf dem Schweißkopf 1 fixiert ist und in einem Abstand $l_0$ angeordnet ist, der kleiner ist als der minimale Abstand $l_1$, in dem die Oberfläche des Schweißstücks 4 liegen kann. Der Entfernungsmeßgeber 10 hat eine Impulslichtquelle 18 (Fig. 2) und ein optisches System 19, die koaxial angeordnet sind, sowie ein Lichtfilter 20 mit entsprechender Spektralcharakteristik, mit einem optischen System 21 und einem linearen Fotoempfänger 22, wobei die optische Achse 23 des optischen Systems 21 unter einem Winkel α zum Meßstrahl 11 angeordnet ist, der von der Lichtquelle 18 ausgestrahlt wird. Das Gesichtsfeld der Lichtquelle 18 ist so gewählt, daß alle Punkte des Meßstrahls 11, die zwischen den Grenzpunkten 24 und 25 (Fig. 3) angeordnet sind, die den Meßbereich des Gebers 10 begrenzen, ein Abbild auf dem linearen Fotoempfänger 22 haben. Durch Messen der Lage dieses Abbildes 39 auf dem linearen Fotoempfänger 22 kann der Abstand bis zu dem laufenden Punkt 12 der Oberfläche des Schweißstückes 4 bestimmt werden.

Mit 26 und 27 sind die Abbilder der Grenzpunkte 24 und 25 auf dem Fotoempfänger 22 bezeichnet. Die Entfernungen bis zu den Grenzpunkten 24 und 25 sind so gewählt, daß, wenn die Oberfläche der Schweißstücke 4 eine Tangente an dem Schweißkopf 1 ist, der Abstand $l_2$ näher als der Grenzpunkt 25 ist, während der Grenzpunkt 24 näher als die Entfernung $l_0$ beim Stift 17 liegen muß, durch den der Null-Radiusvektor 16 bestimmt wird.

Die Position der Oberfläche der Schweißstücke 4, wenn der Schweißkopf 1 eine Tangente zu ihnen ist, ist durch die Grenzlinien 28 und 29 veranschaulicht. Mit 30 ist die Zone bezeichnet, in der eine Schweißnaht 6 aufgetragen werden kann, d. h. wo der Lichtbogen 5 brennen kann. 31 und 32 sind entsprechend die vordere und die hintere Fokalebene des Objektivs 21, während 33 der Punkt ist, in dem der Meßstrahl 11 die vordere Fokalebene 31 durchschneidet. Der Strahl 34 gibt die Richtung des Abbildes 35 vom Punkt 33, während der Strahl 36 in die Richtung des unendlich weit entfernten Punkts des Meßstrahls 11 geht, dessen Abbild 37 auf der hinteren Fokalebene 32 des Objektivs 21 liegt. Der Strahl 38 geht zum Abbild 35 des Punktes 33, in welchem der Meßstrahl 11 die vordere Fokalebene 31 des Objektivs 21 schneidet. Erfindungsgemäß muß, um eine optimale Fokusierung der Punkte zu erzielen, die entlang dem Strahl 11 angeordnet sind, der lineare Fotoempfänger 22 auf diesem Strahl liegen.

Das Abbild 39 jedes beliebigen der aufeinanderfolgenden bzw. laufenden Punkte 12, die sich zwischen den Punkten 24 und 25 befinden, d. h. im Entfernungsmeßbereich, wird eindeutig auf den linearen Fotoempfänger 22 projiziert. Die fixierte Entfernung $l_0$ bis zum Stift 17 ergibt einen leicht abzugrenzenden Impuls 40, der dem Null-Radiusvektor 16 entspricht. An das optische System des Gebers kann ein Element mit steuerbarer Lichtdurchlässigkeit 41, z. B. ein Kerr-Verschluß, angefügt werden, das synchron mit dem Impulsstrahler 18 arbeitet.

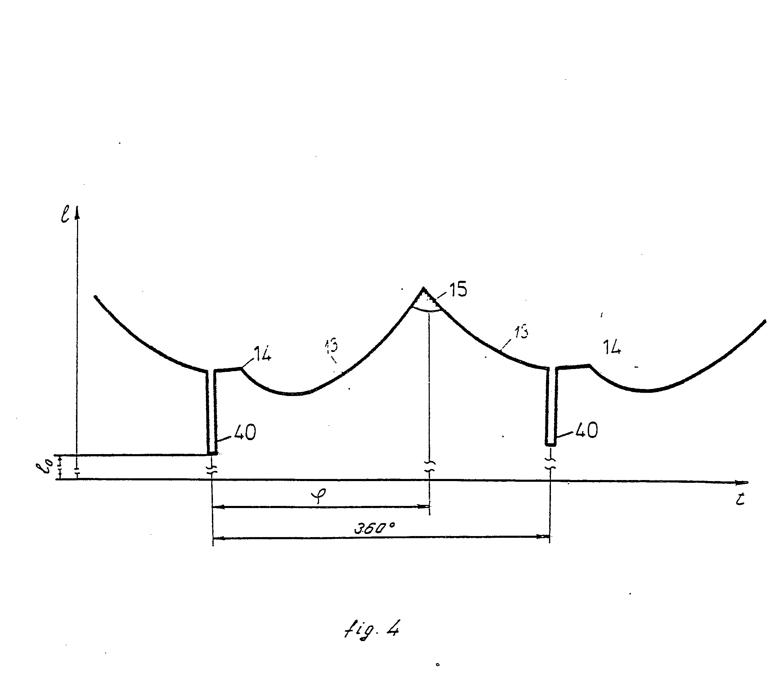

Die in Fig. 4 als Beispiel dargestellte Form des Signals vom Entfernungsmeßgeber 10 zeigt, daß beim Durchgang durch einen « Hornpunkt » 14 die Kurve ihren Charakter abrupt ändert. Die Entfernung kann sich bei einer anderen Konfiguration der Schweißstücke 4 sprungweise ändern, und beim Annähern ans Ende der Schweißstücke 4 sogar außerhalb des Arbeitsbereiches des Entfernungsmeßgebers 10 herauskommen. Auf der entgegengesetzten Seite des Schweißkopfes 1, wo bereits eine Schweißnaht 6 ausgeführt ist, kann die Form des Signals die eines zweiten Hornpunkts 15 annehmen oder auch eine andere Form aufweisen, die ein entsprechendes Abbild der Schweißnaht ist, woraus die Form der bereits ausgeführten Naht beurteilt werden kann.

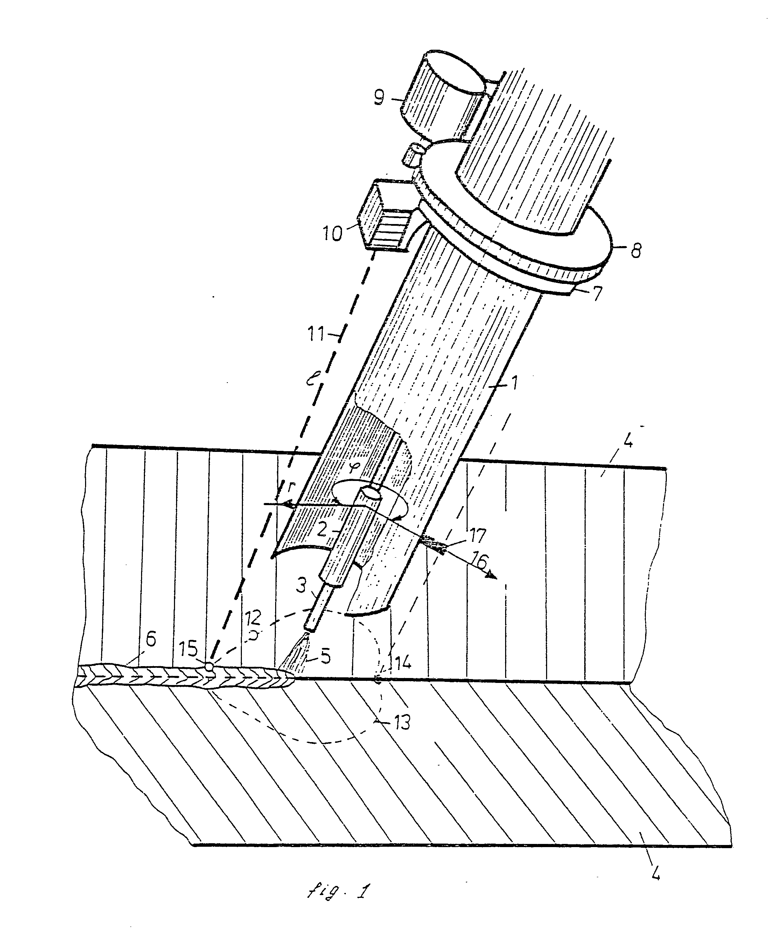

Bei kontinuierlichem Drehen des Entfernungsmeßgebers 10 um den Schweißkopf 1 herum mißt sein Meßstrahl 11 aufeinanderfolgend die Entfernungen bis zu den beiden Schweißstücken 4. In Fig. 1 beschreibt der Meßstrahl 11 zylindrische Oberflächen, die beim Durchdringen der Schweißstücke 4 die Kurven 13 bilden. Der Meßstrahl 11 kann auch eine kegelförmige Oberfläche beschreiben, was von der Art der Befestigung des Entfernungsmeßgebers 10 an die Basis 8 abhängig ist.

Da die Position des Entfernungsmeßgebers 10 im Koordinatensystem des Schweißkopfes 1 immer bekannt ist, wenn für das Messen seines Umdrehungswinkels beispielsweise ein entsprechender Winkelpositionsgeber verwendet wird bzw. das Drehen durch einen Schritt-Elektromotor erfolgt, ist es möglich, aus der Information, die von einer Umdrehung des Entfernungsmeßgebers 10 um den Schweißkopf 1 herum erhalten wird, die gegenseitige Lage des Schweißkopfes 1 und der Schweißstücke 4 zu bestimmen.

Das erfindungsgemäße Verfahren erlaubt das Messen von Entfernungen bis zu Punkten der Oberfläche der Schweißstücke 4, das Bestimmen dieser Oberflächen in Form von Gleichungen und das Berechnen ihrer Schnittlinie. Durch Vergleich der berechneten Positionen der Hornpunkte 14 und 15 mit der durchgeführten Messung kann die Zuverlässigkeit erhöht werden, indem zufällige Entfernungsmessungen eliminiert werden, z. B. Entfernungsmessungen zu Tropfen aus erstarrtem Metall, die an den Oberflächen der Schweißstücke 4 haften. Für diesen Zweck genügen aus der analytischen Geometrie bekannte mathematische Verfahren.

Die Bewegungsrichtung des Schweißkopfes 1 kann durch unmittelbare Bestimmung des Winkels des Hornpunktes 14 in Bezug auf den Null-Radiusvektor 16 bestimmt werden. Bei komplexen Kurven muß die Position der aufeinanderfolgend bestimmten Hornpunkte 14 in einem entsprechenden Speicher gespeichert werden. Der Schweißkopf 1 bewegt sich so, daß er sie aufeinanderfolgend umgeht. Da die Entfernung bis zum Stift 17 des Schweißkopfes 1 viel keiner ist als die Abstände bis zu den Punkten der Oberfläche der Schweißstücke 4, wird beim Durchgang des Meßstrahls 11 über den Stift 17 ein klar abgrenzbarer Impuls 40 erhalten. Dieser Impuls 40 kann, falls nötig, auch für das Eichen des Entfernungsmeßgebers 10 verwendet werden, wenn die Größen, die bei seinem Aufbau bestimmend sind, den Einwirkungen der Temperatur, der Luftfeuchtigkeit und anderer Faktoren unterliegen. Anstelle des beschriebenen optischen Entfernungsmeßgebers können auch nach anderen physikalischen Prinzipien, z. B. nach dem Prinzip der Mikrowellen arbeitende Einrichtungen verwendet werden.

Die Information, die bei dem kreisförmigen Abtasten der Entfernungen bis zu einem Punkt der Oberfläche der Schweißstücke 4 erhalten wird, kann neben der Bestimmung der Abweichung des Schweißkopfes 1 von der Nahtlinie 6 auch für das Bestimmen von vielen anderen Parametern verwendet werden. Es ist zum Beispiel möglich, aus dem Verhältnis zwischen den beiden Entfernungen zu den beiden Hornpunkten 14 und 15 den Winkel zwischen dem Schweißkopf 1 und der Richtung der Schweißnaht 6 zu bestimmen. Von den Entfernungen zu den am nähesten liegenden Punkten beider Oberflächen der Schweißstücke 4 kann auch die Abweichung des Schweißkopfes 1 von ihrer Winkelhalbierenden bestimmt werden. Wenn Abschrägungen an den Schweißstücken 4 vorhanden sind, kann laufend die Größe dieser Abschrägung gemessen werden. Die Schweißbedingungen, nämlich Stromstärke, Spannung des Lichtbogens und Geschwindigkeit der Bewegung des Schweißkopfes entlang der Schweißnaht können dementsprechend korrigiert werden, so daß ein Ausfüllen der Schweißnaht 6 mit genügend Metall erzielt wird. Die Situation ist analog bei einer Änderung der Entfernungen zwischen beiden Schweißstücken oder beim Auftreten einer Fuge, wobei ein zusätzlicher Einsatz bei sehr breiter Fuge vorgesehen wird. All dies ermöglicht das Entwickeln von Industrierobotern und Schweißautomaten mit sehr hoher « Intelligenz » und mit Reaktionsmöglichkeiten auf bedeutende Abweichungen in der Geometrie der Schweißnaht von der vorgegebenen.

Um die Entfernung bis zu einem Punkt der Oberfläche der Schweißstücke 4 zu messen, beleuchtet der Impulsstrahler 18 einen Punkt 12 der Oberfläche dieser Stücke. Das Objektiv 21 fokusiert diesen Punkt auf den linearen Fotoempfänger 22, der die Position des hellen Punktes 39 auf seiner Oberfläche identifiziert. Wenn der

Winkel α zwischen dem Meßstrahl 11 und die optische Achse 23 und anderen charakteristischen Linien der Geometrie des Gebers bekannt sind, ist es möglich, die Entfernung bis zum beleuchteten Punkt 12 zu bestimmen. Die spektrale Empfindlichkeit des Fotoempfängers 22 in Kombination mit der spektralen Charakteristik des Filters 20 und des Impulsstrahlers 18 muß so gewählt werden, daß das Licht des Lichtbogens 5 die Messung nicht stört. Eine Reihe von bekannten Elementen entsprechen dieser Bedingung, besonders diejenigen, die im naheliegenden infraroten Bereich arbeiten, wo die Ausstrahlungsstärke des Lichtbogens stark abnimmt. Für eine zusätzliche Verminderung des Einflusses der Hintergrundbeleuchtung des Lichtbogens 5 und des Erwärmens der Schweißstücke 4 ist es zweckmäßig, im optischen System des Fotoempfängers 22 ein Element mit steuerbarer Lichtdurchlässigkeit einzuschalten, z. B. einen Kerr-Verschluß 41, der sich synchron mit dem Impulsstrahler 18 öffnet.

Bei entsprechender gegenseitiger Anordnung des Strahlers 18 und des Fotoempfängers 22 und der optischen Achsen ihrer entsprechenden Systeme kann der sich zwischen den Punkten 24 und 25 in Fig. 2 befindende Bereich, in dem die Entfernungen zwischen den Schweißstücken 4 gemessen werden können, gleich oder größer gemacht werden als der Bereich, in dem sich diese Stücke tatsächlich befinden können, d. h. zwischen den Grenzlinien 28 und 29, wobei der Schweißkopf praktisch die Oberfläche der Schweißstücke 4 tangiert. Die Entfernung zwischen den Abbildern 26 und 27 der Punkte 24 und 25 auf dem linearen Fotoempfänger 22 muß kleiner sein als die Länge des Fotoempfängers 22. Das Erfüllen dieser Bedingung garantiert das Messen der Entfernung bis zu jedem Schweißstück, ungeachtet der Position des Schweißstückes in Bezug auf die Zone 30, in der es möglich ist, das Schweißen auszuführen.

Für ein optimales Bemessen des optischen Systems des Fotoempfängers 22 muß dieser auf der Geraden 38 liegen, welche den Punkt 37, der das Abbild des unendlich weit entfernten Punktes 36 des Meßstrahls 11 ist, mit dem unendlich weit entfernten Punkt 35 verbindet, der ein Abbild des Punktes 33 ist, in dem der Meßstrahl 11 die vordere Fokalebene 31 des Objektivs 21 schneidet. Der Fotoempfänger 22 muß zwischen den Punkten 26 und 27 liegen, die Abbilder der Punkte 24 und 25 des Meßstrahls 11 sind, zwischen denen sich die Punkte 12 der Oberfläche der Schweißstücke 4 befinden können.

Falls Punkt 33 als Nullpunkt bei einer Ablesung der Entfernung entlang des Meßstrahls 11 angenommen wird, ist die Entfernung zwischen dem laufenden Punkt 12 und der vorderen Fokalebene 31 gleich :

$$l_4 = l_3 \cdot \cos\alpha,$$

wobei α der Winkel zwischen dem Meßstrahl 11 und der optischen Achse 23 ist und $l_3$ für die Entfernung zwischen dem Punkt 33 und dem laufenden Punkt 12 steht. Das Abbild 39 von Punkt 12 liegt auf der Geraden 38 in einem Abstand $l_5$ von der hinteren Fokalebene, wobei

$$l_5 = f^2/l_4,$$

wenn f die Brennweite des Objektivs 21 ist.

Es gibt die Gleichung

$$l_5 = l_6 \cdot \cos\beta,$$

worin β der Winkel zwischen der Geraden 38 und der optischen Achse 23 ist, während $l_6$ die Entfernung zwischen dem Punkt 37, der ein Abbild des unendlich weit entfernten Punktes 36 des Meßstrahls 11 ist und folglich in der hinteren Fokalebene 32 liegt, und dem Punkt 39 ist, der seinerseits ein Abbild des laufenden Punktes 12 ist. Nach Substitution der aufeinanderfolgend bestimmten Größen ergibt sich für die Entfernung $l_6$ zwischen Punkt 37 und Punkt 39 :

$$l_6 = f^2/l_3 \cdot \cos\alpha \cdot \cos\beta$$

Da im optischen System die Winkel α und β sowie auch die Brennweite f konstante Größen sind, entspricht jedem laufenden Punkt 12 des Meßstrahls 11 ein Punkt 39 der Geraden 38, der unter einem Winkel β in Bezug auf die optische Achse 23 des Objektivs 21 angeordnet ist. Bei diesen Bedingungen wird jeder Punkt des auf dem Meßstrahl 11 liegenden Abschnittes 24-25, der in Wirklichkeit der Meßbereich des Systems ist, in einem entsprechenden Punkt auf die Gerade 38 fokusiert, wo sich der lineare Fotoempfänger befindet. Dadurch, daß die Abbilder der Punkte des Abschnittes 24-25 auf dem Fotoempfänger 22 immer in Fokus sind, ist eine genaue Messung gewährleistet.

Das erfindungsgemäße Verfahren und die zugehörige Einrichtung zur Schweißbahnverfolgung durch Abtasten der Entfernung bis zu Punkten von in der Nähe befindlichen Werkstücken können auch bei Robotern Anwendung finden, die auch andere technologische Operationen ausführen, wie z. B. eine Montage, Putzen von Gußstücken, Auftragen und Entfernen von Überzügen, sowie in Meßmaschinen.

**Patentansprüche**

1. Verfahren zur automatischen Schweißbahnverfolgung, bei dem man Punkte (12) der Oberflächen von Schweißstücken (4, 4) durch Verschwenken eines in einer schweißkopffesten Bezugsebene angeordneten Abtastorgans (10) abtastet und durch die Abtastung Signale erzeugt, die eine Information über die Lage der Schweißnaht (6) enthalten und zur Ausrichtung des Schweißkopfes (1) auf die Schweißnaht (6) dienen, dadurch gekennzeichnet, daß das Abtasten der Oberflächen der Schweißstücke (4, 4) durch Entfernungsmessung mittels eines Strahls (11) erfolgt und daß die abgetasteten Punkte (12) auf einer Kurve (13) liegen, die um die Schweißkopfachse herum verläuft, wobei die Anordnung des Schweißkopfes (1) gegenüber den beiden Schweißstücken (4, 4) zwei auf diesen Schweißstücken liegende Kurventeile bestimmt.

2. Verfahren nach Anspruch 1, dadurch gekennzeichnet, daß das Abtasten durch eine kontinuierliche, drehende Bewegung des abtastenden Strahls (11) um den Schweißkopf (1) herum erfolgt.

3. Verfahren nach Anspruch 1, dadurch gekennzeichnet, daß das Abtasten durch eine oszillierende Bewegung des abtastenden Strahls (11) um den Schweißkopf (1) herum erfolgt.

4. Verfahren nach Anspruch 2, dadurch gekennzeichnet, daß sich der abtastende Strahl (11) in der Nähe der Stoßstelle zwischen den Schweißstücken (4, 4) langsam und im übrigen Teil der Kurve mit erhöhter Geschwindigkeit dreht, wobei er Entfernungen über gleiche Zeitintervalle mißt.

5. Verfahren nach Anspruch 2, dadurch gekennzeichnet, daß sich der abtastende Strahl (11) kontinuierlich um den Schweißkopf (1) dreht und die Frequenz des Abtastens der Entfernung bis zu den Schweißstücken (4, 4) im Bereich der Stoßstelle zwischen diesen Schweißstücken erhöht wird.

6. Vorrichtung zur automatischen Schweißbahnverfolgung mit einem Schweißkopf (1) und einem in einer schweißkopffesten Bezugsebene verschwenkbaren Abtastorgan (10), welches Signale erzeugt, die eine Information über die Lage der Schweißnaht enthalten und mit Mitteln zur Ausrichtung des Schweißkopfes (1) auf die Schweißnaht entsprechend dieser Information, dadurch gekennzeichnet, daß das Abtastorgan (10) um den Schweißkopf (1) herumbewegbar angeordnet und als Entfernungsmeßeinrichtung, welche mit einem abtastenden Strahl arbeitet, ausgebildet ist.

7. Vorrichtung nach Anspruch 6, dadurch gekennzeichnet, daß die Entfernungsmeßeinrichtung (10) einen Abbildungspunkte auf einer Geraden unterscheidenden Fotoempfänger (22) aufweist, vor dem ein Objektiv (21) und ein Lichtfilter (20) angeordnet sind, dessen optische Achse (23) einen Winkel mit einem Meßstrahl (11) eines Impulslichtstrahlers (18) einschließt, der zur Spitze des Schweißkopfes (1) gerichtet ist, wobei das Blickfeld und die Brennweite des Objektivs (21) des Fotoempfängers (22) so gewählt sind, daß jedem laufenden Punkt (12), zu dem die Entfernung gemessen wird, ein eindeutiges Projektionsabbild (39) auf der lichtempfindlichen Oberfläche des Fotoempfängers (22) entspricht.

8. Vorrichtung nach Anspruch 7, dadurch gekennzeichnet, daß zwischen dem Fotoempfänger (22) und dem Objektiv (21) ein Element (41) mit steuerbarer Lichtdurchlässigkeit, z. B. ein Kerr-Verschluß, angeordnet ist.

9. Vorrichtung nach Anspruch 7, dadurch gekennzeichnet, daß der Fotoempfänger (22) auf einer Linie (38) liegt, die den Punkt (37), der das Abbild des unendlich weit entfernten Punktes (36) des Meßstrahls (11) ist, wobei dieser Strahl der geometrische Ort der Punkte ist, zu denen die Entfernung gemessen wird, mit dem unendlich weit entfernten Punkt (35) verbindet, der ein Abbild vom Punkt (33) ist, in dem der Meßstrahl (11) die vordere Fokalebene (31) des Objektivs (21) durchschneidet, und daß der Abschnitt (26 bis 27) der auf diese Weise bestimmten Linie (38) vom Meßbereich (24 bis 25) der Meßeinrichtung begrenzt ist.

**Claims**

1. Process for automatically tracking a weld seam, in which points (12) of the surfaces of work pieces (4, 4) to be welded are scanned by pivoting a scanning element (10) arranged in a reference plane fixed with respect to the welding head, and in which signals are produced by the scanning, comprising information on the position of the welding seam (6) and serving to direct the welding head (1) onto the welding seam (6), characterized in that the scanning of the surfaces of the work pieces (4, 4) is made by distance measurement by means of a beam (11), and in that the scanned points (12) are arranged on a curve (13) running around the axis of the welding head, wherein the position of the welding head (1) with respect to the two work pieces (4, 4) defines two curve portions on said work pieces.

2. Process according to claim 1, characterized in that the scanning is made by a continuous, rotating movement of the scanning beam (11) around the welding head (1).

3. Process according to claim 1, characterized in that the scanning is made by an oscillating movement of the scanning beam (11) around the welding head (1).

4. Process according to claim 2, characterized in that the scanning beam (11) moves slowly near the joint between the work pieces (4, 4) and with increased velocity in the residual portion of the curve, wherein it measures distances through equal time intervals.

5. Process according to claim 2, characterized in that the scanning beam (11) rotates continuously around the welding head (1) and that the frequency of the scanning of the distance to the work-pieces (4, 4) is increased in the region of the joint between said work-pieces.

6. Apparatus for automatically tracking a weld seam, comprising a welding head (1) and a scanning element (10) pivotable in a reference plane fixed with respect to the welding head, the scanning element generating signals comprising an information on the position of the welding seam, and means for directing the welding head (1) onto the welding seam corresponding to said information, characterized in that the scanning element (10) is arranged movable around the welding head (1) and formed as distance measuring device operating with a scanning beam.

7. Apparatus according to claim 6, characterized in that the distance measuring device (10) comprises a photo receiver (22) discerning image points on a straight line in front of which receiver an objective (21) and a light filter (20) are arranged, the optical axis (23) of which filter is positioned with an angle with respect to the measuring beam (11) of a pulse light generator (18) being directed to the tip of the welding head (1), wherein the vision field and the focus length of the objective (21) of the photo receiver (22) are selected so that a unique protection image (39) on the light sensitive surface of the photo receiver (22) corresponds to each respective point (12) to which the distance is being measured.

8. Apparatus according to claim 7, characterized in that an element (41) with controllable light transmissivity, for instance a Kerr-diaphragm, is arranged between the photo receiver (22) and the objective (21).

9. Apparatus according to claim 7, characterized in that the photo receiver (22) is positioned on a line (38) connecting the point (37), which is the image of the infinitely remote point (36) of the measuring beam (11), wherein said beam is the geometrical locus of the points to which the distance is being measured, with the infinitely remote point (35), which is the image of the point (33), in which the measuring beam (11) intersects the fore focal plane (31) of the objective (21), and that the section (26 to 27) of the thus obtained line (38) is defined by the measuring range (24 to 25) of the measuring device.

**Revendications**

1. Procédé pour suivre, de façon automatique, une ligne de soudage, selon lequel on balaye des points (12) des surfaces libres des pièces à souder (4, 4) en orientant un organe de balayage (10) disposé dans un plan de référence solidaire de la tête de soudage et on engendre, grâce à ce balayage, des signaux qui contiennent une information sur la position de la soudure (6) et qui sont utilisés pour le centrage de la tête de soudage (1) sur la soudure (6), caractérisé en ce que le balayage des surfaces libres des pièces à souder (4, 4) est réalisé par une mesure d'éloignement effectuée au moyen d'un rayon (11) et en ce que les points balayés (12) sont situés sur une courbe (13) qui s'étend autour de l'axe de la tête de soudage, la disposition de la tête de soudage (1) par rapport aux deux pièces à souder (4, 4) définissant deux tronçons de courbe situés sur ces pièces à souder.

2. Procédé selon la revendication 1, caractérisé en ce que le balayage est réalisé par un mouvement tournant continu du rayon de balayage (11) autour de la tête de soudage (1).

3. Procédé selon la revendication 1, caractérisé en ce que le balayage est réalisé par un mouvement oscillant du rayon de balayage (11) autour de la tête de soudage (1).

4. Procédé selon la revendication 2, caractérisé en ce que le rayon de balayage (11) tourne lentement au voisinage de la zone de jonction entre les pièces à souder (4, 4) et à une vitesse plus élevée sur la partie restante de la courbe, le rayon de balayage mesurant les distances d'éloignement sur des intervalles de temps identiques.

5. Procédé selon la revendication 2, caractérisé en ce que le rayon de balayage (11) tourne, selon un mouvement continu, autour de la tête de soudage (1) et la fréquence du balayage de la distance de l'éloignement vis-à-vis des pièces à souder (4, 4) est augmentée dans la région de la zone de jonction entre ces pièces à souder.

6. Appareil pour suivre, de façon automatique, une ligne de soudage, qui comprend une tête de soudage (1) et un organe de balayage (10) orientable dans un plan de référence solidaire de la tête de soudage et engendrant des signaux contenant une information sur la position de la soudure, et qui est pourvu de moyens pour centrer la tête de soudage (1) sur la soudure en réponse à cette information, caractérisé en ce que l'organe de balayage (10) est monté avec une possibilité de déplacement autour de la tête de soudage (1) et est réalisé sous la forme d'un dispositif de mesure d'éloignement qui fonctionne à l'aide d'un rayon de balayage.

7. Appareil selon la revendication 6, caractérisé en ce que le dispositif de mesure d'éloignement (10) comporte un photo-récepteur (22) discriminant des points-images sur une ligne droite et, devant ce photo-récepteur, sont disposés un objectif (21) et un filtre optique (20) dont l'axe optique (23) délimite un angle avec un rayon de mesure (11) d'un émetteur de rayonnement lumineux pulsé (18) qui est orienté en direction de la pointe de la tête de soudage (1), le champ angulaire et la distance focale de l'objectif (21) du photo-récepteur (22) étant choisis de telle façon qu'à chaque point successif (12) pour lequel est effectuée la mesure d'éloignement, correspond une image nette (39) projetée sur la surface libre sensible à la lumière du photo-récepteur (22).

8. Appareil selon la revendication 7, caractérisé en ce qu'entre le photo-récepteur (22) et l'objectif (21), est disposé un élément (41) à diaphanéité ajustable, comme par exemple un obturateur de Kerr.

9. Appareil selon la revendication 7, caractérisé en ce que le photo-récepteur (22) est positionné sur une ligne (38) reliant le point (37), qui est l'image du point situé à l'infini (36) du rayon de mesure (11), ce rayon étant le lieu géométrique des points pour lesquels la mesure d'éloignement est effectuée, au point situé à l'infini (35) qui est une image du point (33) où le rayon de mesure (11) coupe le plan focal avant (31) de l'objectif (21), et en ce que le segment (26 à 27) de la ligne (38) déterminée de cette façon, est délimité par la plage de mesure (24 à 25) du dispositif de mesure.

fig. 1

fig. 2

0 037 521

fig 3

3

fig. 4